# EUROPEAN PATENT SPECIFICATION

(11) **EP 1 749 940 B1**
(45) Date of publication and mention of the grant of the patent: **30.07.2008**
(21) Application number: 06118492.5
(22) Date of filing: 04.08.2006
(51) Int. Cl.: E03D 1/012, F16B 37/08, F16B 21/02

(54) **Length-adjustable, fast-fit fastening device, in particular for a control plate of a sanitary fixture**
Schnell- und längsverstellbare Befestigungsvorrichtung, insbesondere zur Befestigung einer Betätigungsplatte einer Sanitäranlage.
Dispositif de blocage et de raccord rapide, réglable en longueur, en particulier pour fixer une plaque de commande d'un élément sanitaire.

(30) Priority: 05.08.2005 IT MI20051550
(43) Date of publication of application: 07.02.2007
(73) Proprietor: Oliveira & Irmao S.A., 3800 Aveiro (PT)
(72) Inventor: Moura de Oliveira, Antonio Manuel, 3800-25, Aveiro (PT)
(74) Representative: Jorio, Paolo

(56) References cited:
- EP-A1- 0 273 863
- EP-A2- 0 942 183
- WO-A2-03/001068
- US-A- 1 451 970

## Description

The present invention relates to a length-adjustable, fast-fit fastening device, particularly suitable for sanitary fixtures, and in particular for fastening a control plate of a recessed flush tank.

As is known, the flush actuating members of walled-in or recessed flush tanks are controlled by a control plate normally wall-mounted by means of a supporting frame. In which case, the problem arises of fastening the plate supporting frame to the tank a predetermined distance apart, depending on the thickness of the wall.

Various devices are known for fastening the control plate adjustably to the tank.

Adjustable-length fast-fit fastening devices for sanitary fixtures are known, for example from EP-A-0273863 and EP-A-0942183, having a main member with a seat, an adjustable rod slidably inserted in the seat, and a lock member to secure the rod inside the seat.

Known devices, however, leave room for improvement in terms of easy, low-cost manufacture and fast, troublefree use.

It is therefore an object of the present invention to provide an adjustable, fast-fit fastening device, particularly suitable for fastening a control plate of a flush tank, which is cheap and easy to produce, while at the same time being efficient and reliable, and fast and easy to use. More specifically, it is an object of the invention to provide a device enabling effective, troublefree, fast rough adjustment, followed by fine adjustment, of the length of the device (i.e. the distance between the elements connected by the device).

According to the present invention, there is provided a length-adjustable, fast-fit fastening device, in particular for fastening a control plate of a sanitary fixture, as defined in the attached Claim 1.

The device according to the invention is extremely cheap and easy to produce, as well as to install and use, and permits easy, precise adjustment - in particular, fast rough adjustment followed, if necessary, by fine adjustment.

A non-limiting embodiment of the present invention will be described by way of example with reference to the accompanying drawings, in which:
Figure 1 shows a schematic longitudinal section of a length-adjustable, fast-fit fastening device in accordance with the invention;
Figures 2 and 3 show two partial exploded views of the Figure 1 device with parts removed for clarity;
Figure 4 shows a plan view of the Figure 1 device with parts removed for clarity;
Figure 5 shows a side view of the Figure 1 device with parts removed for clarity;
Figure 6 shows a plan view of a component part of the Figure 1 device;
Figures 7 and 8 show partial plan views of the Figure 1 device in respective operating positions.

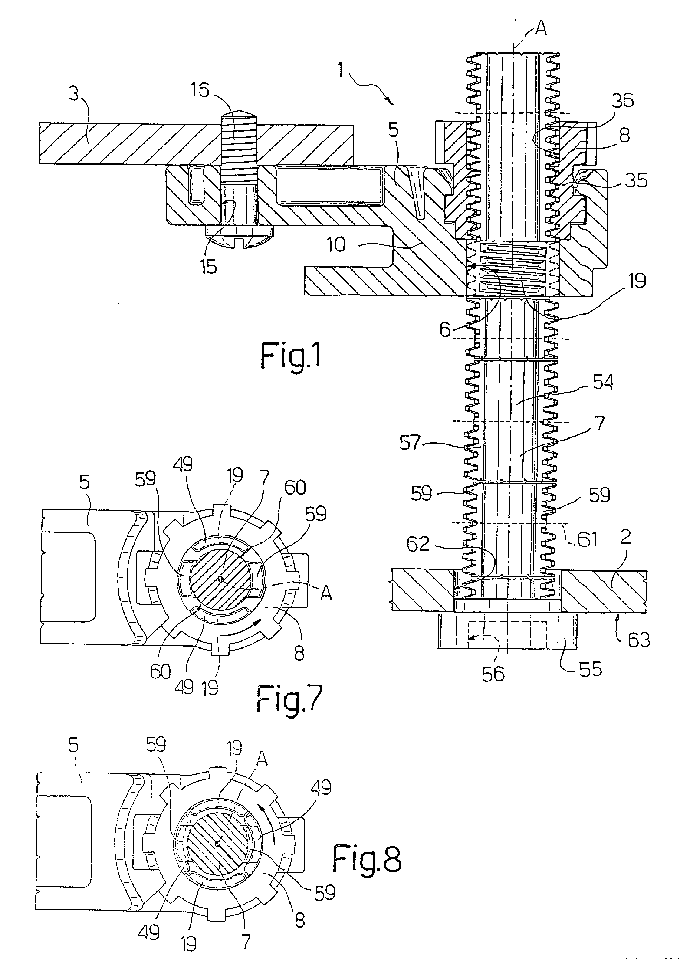

Number 1 in Figure 1 indicates as a whole a fast-fit fastening device adjustable in length along an axis A, and in particular for fastening two components 2, 3 of a sanitary fixture a predetermined distance apart along axis A. In the Figure 1 example, device 1 is used to fix, a predetermined distance apart, a known control plate, of which only a frame portion 2 is shown, to a known lavatory flush tank, of which only a wall portion 3 is shown.

Device 1 comprises a main member 5 having a seat 6 extending along axis A; a connecting rod 7 inserted and sliding inside seat 6 along axis A; and a lock member 8 for securing rod 7 inside seat 6. Main member 5, rod 7, and lock member 8 are all made of plastic.

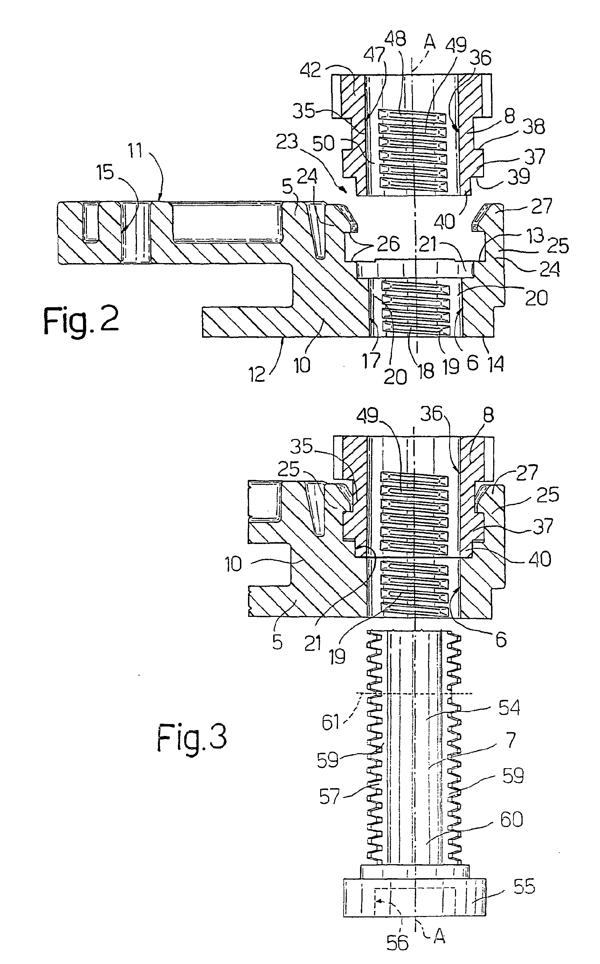

As shown in detail in Figure 2, main member 5 comprises an elongated body 10 having seat 6, which is formed through two opposite surfaces 11, 12 of body 10 and bounded by two opposite end edges 13, 14. Main member 5 also has a through hole 15, parallel to seat 6, for insertion of a fastening member 16, e.g. a screw, by which to fix main member 5 to component 3.

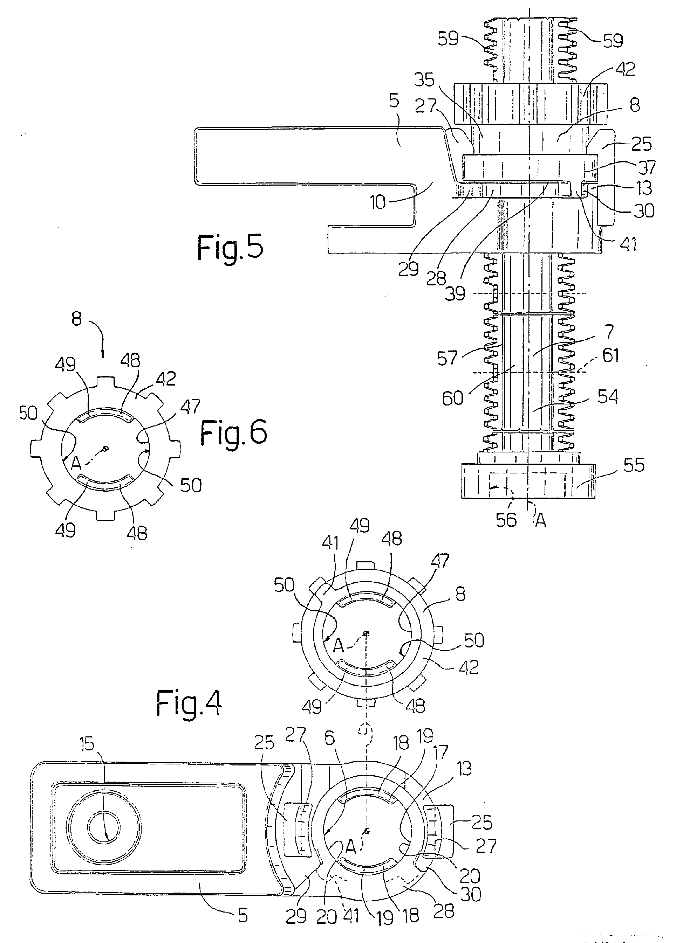

As shown more clearly in Figure 4, seat 6 is substantially cylindrical, and has an inner lateral surface 17 from which two threaded, diametrically opposite projections 18 project towards each other and radially inwards of seat 6. Seat 6 therefore has two threaded sectors 19, defined by projections 18, alternating circumferentially with two smooth sectors 20 defined by the portions of surface 17 between the projections and having no threads. Threaded sectors 19 extend parallel to axis A inside seat 6, and each extend about an angle of roughly 90° (or less) with respect to the centre of seat 6.

Seat 6 has an end portion 21 bounded by a radially outer annular shoulder facing surface 11 and edge 13.

Main member 5 has a guide 23 for supporting lock member 8 in rotary manner about axis A. In the non-limiting example shown, guide 23 comprises lateral-wall portions 24 defined by respective arms 25 (two diametrically opposite arms 25 in the example shown) projecting from surface 11, parallel to axis A, and curving about axis A; and opposite, facing, axial locating members 26 perpendicular to axis A. Locating members 26 are defined by edge 13 and, respectively, by two flexible teeth 27 at respective free ends of arms 25.

As shown in Figures 4 and 5, guide 23 has a curved groove 28 formed in edge 13, extending about an angle of roughly 90°, and having two stop members 29, 30 located roughly 90° apart at respective opposite ends of groove 28 to limit rotation of lock member 8 between two predetermined limit positions, as explained below.

Lock member 8 comprises a cylindrical ring 35 extending along axis A. Ring 35 has an inner axial through seat 36; and a radially outer collar 37 extending about ring 35 and defined by two opposite annular shoulders 38, 39.

Ring 35 is housed inside guide 23, between arms 25, so as to rotate about axis A. More specifically, an end portion 40 of ring 35 is inserted for rotation inside end portion 21 of seat 6, shoulder 39 rests on edge 13, and shoulder 38 is engaged by teeth 27.

Lock member 8 has a radially outer appendix 41 projecting axially from shoulder 39 and housed inside groove 28 to cooperate with stop members 29, 30.

Lock member 8 also comprises a ring nut 42 integral with ring 35 and user-operated to rotate lock member 8 with respect to main member 5.

Seat 36 is aligned with seat 6 along axis A, is in turn substantially cylindrical, and has an inner lateral surface 47 supporting two diametrically opposite, longitudinal projections 48, which extend parallel to axis A and project, towards each other, radially inwards of seat 36. Projections 48 are threaded and define respective threaded sectors 49, each of which extends about an angle of roughly 90° (or less), and which alternate circumferentially with smooth sectors 50 defined by portions of surface 47 with no threads.

As shown in Figures 1, 3 and 5, rod 7 comprises a substantially cylindrical stem 54 extending along axis A; and a head 55 having a cavity 56, and which is manoeuvred manually or by means of an appropriate tool inserted inside cavity 56. Stem 54 has an outer lateral surface 57 having two diametrically opposite, longitudinal threaded portions 59 alternating circumferentially with two longitudinal grooves 60. Stem 54 also has a number of cut-off sections 61 spaced along axis A, and by which to cut off surplus portions of rod 7, as required.

Stem 54 is inserted through a hole 62 in component 2, and through seats 6, 36; and head 55 rests against a front surface 63 of component 2.

Lock member 8 is movable with respect to main member 5 to selectively align and offset threaded sectors 19, 49 of seats 6, 36 along axis A. More specifically, as shown in Figures 7 and 8, lock member 8 rotates about axis A to selectively assume:
- an open position, in which threaded sectors 19, 49 of seats 6, 36 are aligned and located along grooves 60 of rod 7, and rod 7 slides freely inside seats 6, 36 along axis A (Figure 7);
- a closed position, in which threaded sectors 19, 49 of seats 6, 36 are offset and engage threaded portions 59 of rod 7, so that rod 7 is screwed inside seats 6, 36 by threaded portions 59 engaging threaded sectors 19, 49 (Figure 8).

The open position and closed position of lock member 8 correspond to the two predetermined limit positions defined by stop members 29, 30 (and shown by the dash line in Figure 4).

Device 1 operates as follows.

Main member 5, complete with lock member 8 clicked inside guide 23 by virtue of flexible teeth 27, is fixed to component 3 (Figure 1) ; lock member 8 is in the open position (Figure 7), and rod 7, cut to length, if necessary, using cut-off sections 61, is inserted through hole 62 and seats 6, 36, with threaded portions 59 offset with respect to threaded sectors 19, 49 of seats 6, 36, i.e. with threaded sectors 19, 49 located along grooves 60. Grooves 60 are sized to avoid interfering with threaded sectors 19, 49, so that rod 7 slides freely along axis A inside the seats to permit fast rough adjustment of the length of device 1, i.e. of the distance between components 2 and 3 being fitted together. Appendix 41 rests against stop member 29.

The user then moves lock member 8 into the closed position (Figure 8). The operator may also work directly on head 55 of rod 7 to rotate rod 7 ninety degrees clockwise about axis A with respect to main member 5. Rotation of rod 7 causes threaded portions 59 to engage threaded sectors 19, 49 and so also rotate lock member 8, which is thus moved into the closed position and arrested upon appendix 41 contacting stop member 30.

At this point, threaded sectors 19, 49 of seats 6, 36 are offset, and define a common threaded seat for rod 7, inside which rod 7 is screwed by means of threaded portions 59. Fine adjustment of the length of device 1 along axis A can be made by further clockwise rotation of rod 7.

Conversely, anticlockwise rotation of rod 7 with respect to main member 5 rotates lock member 8 until appendix 41 comes to rest against stop member 29, and restores lock member 8 to the open position, so that rod 7 can again be slid rapidly inside seats 6, 36.

Clearly, changes may be made to the device as described and illustrated herein without, however, departing from the scope of the accompanying Claims.

## Claims

1. Adjustable-length, fast-fit fastening device (1), in particular for a sanitary fixture control plate, comprising a main member (5) having a seat (6) extending along an axis (A); a connecting rod (7) inserted inside the seat (6) so as to slide along said axis (A), and having threaded portions (59); and a lock member (8) for securing the rod (7) inside the seat (6); the main member (5) and the lock member (8) having respective seats (6, 36) aligned along said axis (A) for insertion of the rod (7), the device being **characterized in that** said seats (6, 36) have respective threaded sectors (19, 49) alternating circumferentially with smooth sectors (20, 50); and the lock member (8) is movable with respect to the main member (5) to selectively align and offset the threaded sectors (19, 49) of the two seats (6, 36) along said axis (A).

2. A device as claimed in Claim 1, **characterized in that** the lock member (8) is movable on the main member (5) to selectively assume an open position, in which the threaded sectors (19, 49) of the seats (6, 36) are aligned and the rod (7) slides freely inside the seats (6, 36) along said axis (A), and a closed position, in which the threaded sectors (19, 49) of the seats (6, 36) are offset and the rod (7) is screwed inside the seats (6, 36).

3. A device as claimed in Claim 2, **characterized in that** the lock member (8) is fitted to the main member (5) to rotate about said axis (A) to selectively assume the open position and the closed position.

4. A device as claimed in Claim 2 or 3, **characterized in that** the main member (5) comprises a guide (23) for supporting the lock member (8) for rotation about said axis (A).

5. A device as claimed in Claim 4, **characterized in that** the lock member (8) clicks inside the guide (23).

6. A device as claimed in one of Claims 2 to 5, **characterized in that** the main member (5) comprises stop members (29, 30) to limit rotation of the lock member (8) between two predetermined limit positions corresponding to the open position and the closed position.

7. A device as claimed in one of the foregoing Claims, **characterized in that** the rod (7) has longitudinal threaded portions (59) for engaging the threaded sectors (19, 49) of the seats (6, 36), and which alternate circumferentially with longitudinal grooves (60).

8. A device as claimed in Claim 6, **characterized in that** the rod (7) rotates inside the seats (6, 36) about said axis (A) to selectively cause the threaded portions (59) to engage the threaded sectors (19, 49) by rotation in a predetermined direction, and to release the threaded sectors (19, 49) by rotation in the opposite direction.

9. A device as claimed in one of the foregoing Claims, **characterized in that** the threaded sectors (19, 49) extend parallel to said axis (A), and each extend about an angle of roughly 90° or less.

10. A device as claimed in one of the foregoing Claims, **characterized in that** each of said seats (6, 36) has two diametrically opposite threaded sectors (19, 49) alternating circumferentially with two smooth sectors (20, 50).

## Patentansprüche

1. Schnell- und längsverstellbare Befestigungsvorrichtung (1), insbesondere zur Befestigung einer Betätigungsplatte einer Sanitäranlage, die umfasst: ein Hauptelement (5) mit einem Auflager bzw. Sitz (6), der sich entlang einer Achse (A) erstreckt; einer Verbindungsstange (7), die ins Innere des Sitzes (6) eingesetzt ist, um entlang der Achse (A) zu gleiten, und die Gewindeabschnitte (59) hat; und ein Arretier- bzw. Sperrelement (8) zum Befestigen der Stange (7) im Inneren des Sitzes (6); wobei das Hauptelement (5) und das Sperrelement (8) jeweilige Sitze (6,36) entlang der Achse (A) für das Einsetzen der Stange (7) ausgerichtet haben, wobei die Vorrichtung **dadurch gekennzeichnet ist, dass** die Sitze (6, 36) jeweilige Gewindesektoren (19, 49) haben, die sich im Umfang mit glatten Sektoren (20, 50) abwechseln; und das Sperrelement (8) in Bezug auf das Hauptelement (5) beweglich ist, um die Gewindesektoren (19, 49) der zwei Sitze (6, 36) entlang der Achse (A) selektiv auszurichten und zu versetzen (19, 49).

2. Vorrichtung nach Anspruch 1, **dadurch gekennzeichnet, dass** das Sperrelement (8) auf dem Hauptelement (5) beweglich ist, um selektiv eine offene Position, in der die Gewindesektoren (19, 49) der Sitze (6,36) ausgerichtet sind, und die Stange (7) frei im Inneren der Sitze (6, 36) entlang der Achse (A) gleitet, und eine geschlossene Position einzunehmen, in der die Gewindeabschnitte (19, 49) der Sitze (6, 36) versetzt sind, und die Stange (7) im Inneren der Sitze (6, 36) angeschraubt ist.

3. Vorrichtung nach Anspruch 2, **dadurch gekennzeichnet, dass** das Sperrelement (8) in das Hauptelement (5) eingepasst ist, um sich um die Achse (A) zu drehen, um selektiv die offene und die geschlossene Position einzunehmen.

4. Vorrichtung nach Anspruch 2 oder 3, **dadurch gekennzeichnet, dass** das Hauptelement (5) eine Führung (23) zum Halten des Sperrelements (8) für die Drehung um die Achse (A) umfasst.

5. Vorrichtung nach Anspruch 4, **dadurch gekennzeichnet, dass** das Sperrelement (8) im Inneren der Führung (23) einschnappt.

6. Vorrichtung nach einem der Ansprüche 2 bis 5, **dadurch gekennzeichnet, dass** das Hauptelement (5) Anschlagelemente (29, 30) umfasst, um die Drehung des Sperrelements (8) zwischen zwei vorgegebenen der offenen und der geschlossenen Position entsprechenden Grenzpositionen zu begrenzen.

7. Vorrichtung nach einem der vorangehenden Ansprüche, **dadurch gekennzeichnet, dass** die Stange (7) Längsgewindeabschnitte (59) zum Eingreifen in die Gewindesektoren (19, 49) der Sitze (6, 36) hat, die sich am Umfang mit Längsrillen (60) abwechseln.

8. Vorrichtung nach Anspruch 6, **dadurch gekennzeichnet, dass** die Stange (7) sich im Inneren der Sitze (6, 36) um die Achse (A) dreht, um durch die Drehung in eine vorgegebene Richtung selektiv zu bewirken, dass die Gewindeabschnitte (19) in die Gewindesektoren (19, 49) eingreifen, und um die Gewindesektoren (19, 49) durch die Drehung in die entgegengesetzte, Richtung zu lösen.

9. Vorrichtung nach einem der vorangehenden Ansprüche, **dadurch gekennzeichnet, dass** die Gewindesektoren (19, 49) sich parallel zu der Achse (A) erstrecken und sich jeweils um einen Winkel von annähernd 90° oder weniger erstrecken.

10. Vorrichtung nach einem der vorangehenden Anspruchs, **dadurch gekennzeichnet, dass** jeder der Sitze (6, 36) zwei diametral entgegengesetzte Gewindeabschnitte (19,49) hat, die sich am Umfang mit glatten Sektoren (20, 50) abwechseln.

## Revendications

1. Dispositif de fixation à raccord rapide réglable en longueur (1), en particulier pour une plaque de commande d'installation sanitaire, comprenant un élément principal (5) ayant un siège (6) s'étendant le long d'un axe (A) ; une tige de raccordement (7) insérée à l'intérieur du siège (6) afin de coulisser le long dudit axe (A), et ayant des parties filetées (59) ; et un élément de blocage (8) pour fixer la tige (7) à l'intérieur du siège (6) ; l'élément principal (5) et l'élément de blocage (8) ayant des sièges (6, 36) respectifs alignés le long dudit axe (A) pour l'insertion de la tige (7), le dispositif étant **caractérisé en ce que** lesdits sièges (6, 36) ont des secteurs filetés (19, 49) respectifs alternant de manière circonférentielle avec des secteurs lisses (20, 50) ; et l'élément de blocage (8) est mobile par rapport à l'élément principal (5) afin d'aligner et de décaler sélectivement les secteurs filetés (19, 49) des deux sièges (6, 36) le long dudit axe (A).

2. Dispositif selon la revendication 1, **caractérisé en ce que** l'élément de blocage (8) est mobile sur l'élément principal (5) pour prendre sélectivement une position ouverte, dans laquelle les secteurs filetés (19, 49) des sièges (6, 36) sont alignés et la tige (7) coulisse librement à l'intérieur des sièges (6, 36) le long dudit axe (A), et une position fermée, dans laquelle les secteurs filetés (19, 49) des sièges (6, 36) sont décalés et la tige (7) est vissée à l'intérieur des sièges (6, 36).

3. Dispositif selon la revendication 2, **caractérisé en ce que** l'élément de blocage (8) est raccordé à l'élément principal (5) pour tourner autour dudit axe (A) pour prendre sélectivement la position ouverte et la position fermée.

4. Dispositif selon la revendication 2 ou 3, **caractérisé en ce que** l'élément principal (5) comprend un guide (23) pour supporter l'élément de blocage (8) pour la rotation autour dudit axe (A).

5. Dispositif selon la revendication 4, **caractérisé en ce que** l'élément de blocage (8) s'emboîte à l'intérieur du guide (23).

6. Dispositif selon l'une quelconque des revendications 2 à 5, **caractérise en ce que** l'élément principal (5) comprend des éléments de butée (29, 30) pour limiter la rotation de l'élément de blocage (8) entre deux positions de limite prédéterminées correspondant à la position ouverte et la position fermée.

7. Dispositif selon l'une quelconque des revendications précédentes, **caractérisé en ce que** la tige (7) a des parties filetées longitudinales (59) pour mettre en prise des secteurs filetés (19, 49) des sièges (6, 36), et qui alternent de manière circonférentielle avec des rainures longitudinales (60).

8. Dispositif selon la revendication 6, **caractérisé en ce que** la tige (7) tourne à l'intérieur des sièges (6, 36) autour dudit axe (A) pour amener sélectivement les parties filetées (59) à mettre en prise les secteurs filetés (19, 49) par rotation dans une direction prédéterminée, et pour libérer les secteurs filetés (19, 49) par rotation dans la direction opposée.

9. Dispositif selon l'une des revendications précédentes, **caractérisé en ce que** les secteurs filetés (19, 49) s'étendent parallèlement audit axe (A), et chacun s'étend autour d'un axe d'approximativement 90° ou moins.

10. Dispositif selon l'une des revendications précédentes, **caractérisé en ce que** chacun desdits sièges (6, 36) a deux secteurs filetés (19, 49) diamétralement opposés, alternant de manière circonférentielle avec deux secteurs lisses (20, 50).
